Europäisches Patentamt

European Patent Office

Office européen des brevets

(11) Publication number: **0 332 347**
**A1**

# EUROPEAN PATENT APPLICATION

(21) Application number: **89302102.2**

(22) Date of filing: **02.03.89**

(51) Int. Cl.⁴: **B60R 25/04**

(30) Priority: **02.03.88 IE 580/88**

(43) Date of publication of application:
**13.09.89 Bulletin 89/37**

(84) Designated Contracting States:
**AT BE CH DE ES FR GB GR IT LI LU NL SE**

(71) Applicant: Gosker, Brendan Gerard
37A Binn Eadair View
Sutton County Dublin(IE)

Applicant: Sheeran, Patrick
25 Bachelors Walk
Dublin 1(IE)

(72) Inventor: Gosker, Brendan Gerard
37A Binn Eadair View
Sutton County Dublin(IE)
Inventor: Sheeran, Patrick
25 Bachelors Walk
Dublin 1(IE)

(74) Representative: Barker, Rosemary Anne et al
Barlow, Gillett & Percival Hollins Chambers
64A Bridge Street
Manchester M3 3BA(GB)

(54) **A fuel cut-off anti-theft device.**

(57) A fuel cut-off anti-theft device for a vehicle comprises an electronic fuel pump 1 having operating means housed within the body of the pump and control means for the operating means. The control means comprises a local control device 10 which may be attached to the pump 1 and a remote input keypad 12. The pump body 6 and local control device 10 are encapsulated within an epoxy resin 11 which is brittle on setting to make it extremely difficult for a thief to tamper with the device.

Fig.2

## An Anti-Theft Device

The invention relates to an anti-theft device and in particular to an anti-theft device for use in association with a fuel pump.

The object of the invention is to provide an improved anti-theft device for a fuel pump which will be difficult for a thief to tamper with.

According to the invention there is provided a fuel cut-off anti-theft device for a vehicle having operating means for operating a fuel pump, the device comprising control means for the operating means of the fuel pump, the control means comprising a local control device and a remote control signal input means.

The advantage of providing an anti-theft device for a fuel pump is to increase the difficulty and expense involved for a thief in trying to steal a vehicle. Fuel pumps are generally inaccessible, in some cases being mounted within a fuel tank, and are impractical to access without jacking-up of the vehicle. Further, fuel pumps are expensive and it is not generally practical for a thief to have a replacement available, aside from the extreme practical difficulty of replacement. In one embodiment of the invention the control device is mounted adjacent to the fuel pump. One advantage of this feature of the invention is that because the control device is mounted adjacent to the fuel pump it is difficult to tamper with the control device.

In one embodiment of the invention the control device is attached to the fuel pump. This makes it difficult to tamper with either the pump or the control device as one acts to shield the other.

In a particularly preferred embodiment of the invention tamper-proof means are provided to prevent tampering with the local control device.

The tamper-proof means preferably comprises an encapsulating or potting compound, such as an epoxy resin, enclosing the local control device and, in those cases where the local circuit device is mounted to the fuel pump preferably also at least portion of the fuel pump body. This makes it almost impossible for a thief to interfere with the device. Ideally, the compound is brittle on setting so that it will be very difficult to break in such a way as to allow the device to be interfered with.

In a preferred embodiment of the invention the input means comprises a remote keypad. Such an input means is easy to operate and allows a coded input to be used. The keypad may be connected to the control device by a cable along which an input signal from the keypad is delivered to operate the pump.

In a particularly preferred embodiment of the invention the control device does not allow the pump to operate if a power supply source to the control device is cut off. The advantage of this feature is in ensuring the pump is not operational if the power supply is cut.

Preferably, a preset number and sequence of input keys are pressed to allow the pump to be operated.

In a preferred embodiment of the invention the local control device comprises an electronic circuit.

The electronic circuit may comprise an integrated circuit sequence detector in association with a relay means for the pump.

In a particularly preferred embodiment of the invention all the control circuitry, including the relay means for operating the pump is positioned adjacent the pump. The invention will be more clearly understood from the following description of an embodiment thereof given by way of example only with reference to the accompanying drawings:

Fig. 1 is a perspective view of portion of an anti-theft device according to the invention.

Fig. 2 is a front, partially cross-sectional view of the device,

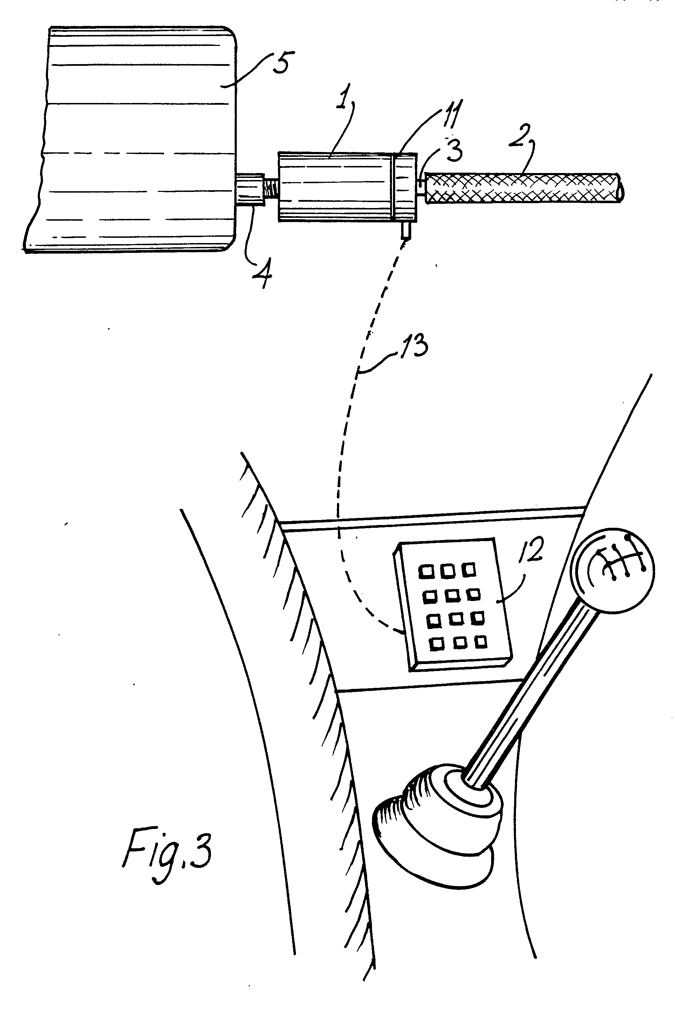

Fig. 3 is a perspective view of the anti-theft device, in use, and

Fig. 4 is a schematic circuit diagram of portion of the device.

Referring to the drawings, there is illustrated a fuel cut-off anti-theft device for a vehicle comprising an electronic fuel pump 1 for mounting in a vehicle fuel line 2 adjacent the fuel tank 5. In this case, the pump 1 includes an inlet spigot 3 to which the fuel line 2 is attached and an outlet spigot 4 which is screwed to a bushing on the fuel tank 5 of the vehicle. The pump 1 is of conventional construction and includes operating means housed within the pump body 6 for allowing the pump to be operated to deliver fuel from the tank 5 to the fuel line 2. Control means for the operating means comprises a local control device 10 associated with the pump 1 and which is mounted adjacent to the pump 1 and in this case is attached to it, the pump body 6 shielding the local control device 10 and vice versa against tampering.

The control device 10 and at least the outlet portion of the pump in this case are encapsulated with an epoxy resin 11. Preferably the potting compound is brittle on setting making it difficult to break in such a way as to allow the control device 10 to be interfered with.

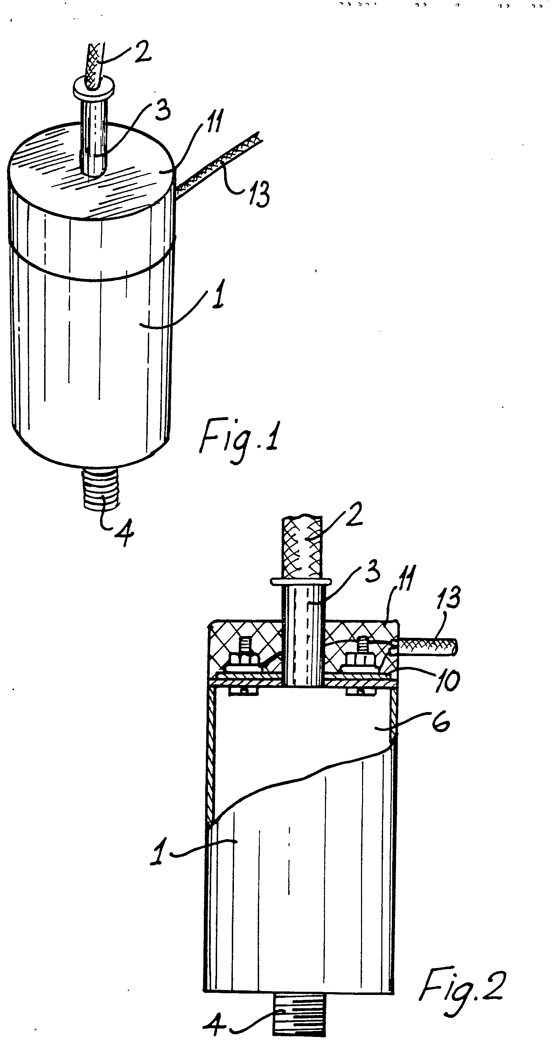

The control means also comprises a remote control signal input means, in this case, a keypad 12 which is usually mounted within the vehicle, for example, on the dashboard as illustrated in Fig. 2 and is connected to the control device 10 by a multi-core cable 13.

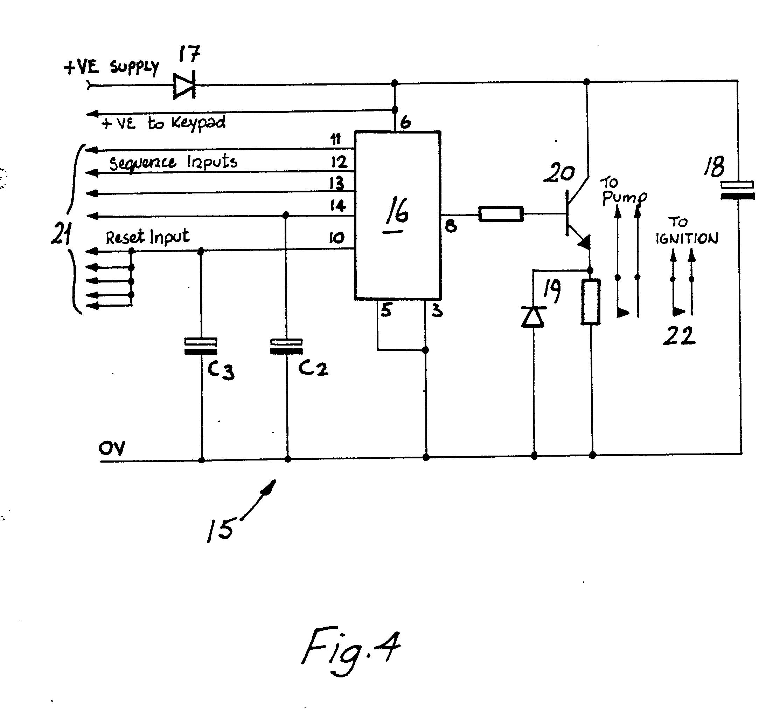

The local control device 10 includes an electronic circuit 15 which is illustrated schematically in Fig. 4 and comprises an integrated circuit sequence detector 16 powered by a DC supply of nominally 12V via a reverse-polarity protection diode 17 and capacitor 18. This capacitor 18 smooths out supply line disturbances and retains a reserve of charge to maintain the sequence detector 16 in the triggered state in the event of a supply interruption of short duration such as might occur if the vehicle were to stall and be restarted. The pump is controlled by a relay 19 which is operated by a transistor 20 which is driven from the sequence detector 16. Input signals from the keypad are fed to the sequence detector 16 along input lines 21. An auxiliary set of contacts 22 may be provided on the relay 19 to interrupt the ignition circuit of the vehicle.

The sequence detector 16 decodes the input signals and outputs a trigger output signal to the relay 19 in accordance with the instructions pre-programmed into the integrated circuit. The instruction to allow the pump to be operated preferably comprises a coded sequence of inputs which must be inputed through the keypad. If the input sequence corresponds to the pre-programmed sequence on the integrated circuit 16, a trigger output signal is outputted to operate the relay 19 to allow the pump 1 to be operated. In the event that the input signal is not the same as the inputs pre-programmed at manufacturing stage into the integrated circuit, no output is delivered on the trigger output line and the pump 1 will not operate.

To prevent tampering, the electronic circuit 15, and in this case also the pump body 6 are mounted in a potting box 9 and encapsulated with a flame retardant epoxy resin compound to form an encapsulated mass 11 which becomes brittle on setting. Thus, it would be extremely difficult if not impossible for a thief to tamper with the circuit. In addition to protecting the electronic circuit 15, the encapsulation of the circuit and also at least part of the pump body also protects the pump operating means including all control circuitry, including the relay, against tampering.

The invention provides an anti-theft device which is extremely difficult if not impossible, to tamper with. Only the input keypad is positioned in the car and the pump cannot be operated without the correct sequence being inputed at the keypad. In the event that the cable between the keypad and the electronic circuit is cut, the pump still will not operate. Any attempt to interfere with the electronic circuit by trying to break 5 the resin will more than likely result in damage to the circuit and again the pump will not operate.

It will be appreciated that while a particular type of pump has been illustrated and described, any suitable fuel pump may be employed.

One advantage of the invention is in allowing the fuel to be cut off at source in the event of an accident to help prevent possible combustion; fire and/or explosion. Thus, impact detection means may be provided to operate the relay to prevent the pump from operating in the event of an accident.

It will also be appreciated that the anti-theft device according to the invention may be linked to or associated with any other suitable anti-theft device and may, for example, provide an output signal to an audible or visual alarm, or may be linked with such a system.

It will further be appreciated that any coded signal may be used to operate the pump. Where the coded signal is inputed through a keypad the code is preferably at least a two digit code and most preferable at least a four digit code to prevent accidental shut-off of the valve.

It is anticipated that instead of mounting the local control device to the fuel pump it may in some cases be mounted in some other inaccessible location which may or may not be close to the fuel pump. Such an arrangement may allow at least some of the advantages of the device described above to be achieved. This is because by providing an anti-theft device for a fuel pump the difficulty and expense for a thief is increased. Fuel pumps are generally inaccessible, in some cases being mounted within a fuel tank, and are impractical to access without jacking-up of the vehicle. Further, fuel pumps are generally expensive and it is impractical for a thief to have a replacement available, aside from the extreme practical difficulty in replacement.

To increase the difficulty of replacement, preferably the threads on the inlet and outlet spigots of the pump should be different. Indeed, it is preferred that at least the inlet thread on the pump should be a unique thread.

The keypad may be permanently mounted to the vehicle dashboard or may be readily removable by the user. For example, the keypad may be attached to the cable by any suitable quick release mechanism.

To facilitate temporary difficulties in driving, for example, due to engine cut-out in traffic a time delay of typically ten seconds may be allowed in which the user may restart the vehicle without a keypad entry being required. Further, to facilitate valet parking and servicing an override facility may be provided.

It will be appreciated that the anti-theft device may be used in association with a motor car, commercial vehicle, motorcycle, boat or the like.

## Claims

1. A fuel cut-off anti-theft device for a vehicle having operating means for operating a fuel pump (1), the device comprising
control means (10, 12) for the operating means for the fuel pump,
the control means comprising a local control device (10) associated with the pump (1) and a remote control signal input means (12) for disabling the operation of the fuel pump (1).

2. An anti-theft device as claimed in claim 1 wherein the local control device (12) is mounted adjacent to the fuel pump (1).

3. An anti-theft device as claimed in claim 1 or 2 wherein the local control device (12) is attached to the fuel pump (1).

4. An anti-theft device as claimed in any preceding claim wherein tamper-proof means (11) are provided to prevent tampering with the local control device (12).

5. An anti-theft device as claimed in claim 4 wherein the tamper-proof means (11) comprises an encapsulating or potting compound, such as epoxy resin, enclosing the local control device (12).

6. An anti-theft device as claimed in claim 5 wherein the compound also encloses at least portion of a fuel pump body (6).

7. An anti-theft device as claimed in any preceding claim wherein the input means comprises a remote keypad (12).

8. An anti-theft device as claimed in claim 7 wherein the keypad (12) is connected to the local control device (10) by a cable (13) along which an input signal from the keypad (12) is delivered.

9. An anti-theft device as claimed in any preceding claim wherein the local control device (10) does not allow the pump (1) to operate if the power supply source to the control device is cut-off.

10. An anti-theft device as claimed in any preceding claim wherein the local control device (10) comprises an electronic circuit, preferably the electronic circuit comprises an integrated circuit sequence detector (16) in association with a relay means (19) for the pump (1).

Fig.1

Fig.2

Fig.3

+VE Supply  17

+VE to Keypad

Sequence Inputs

11
12
13
14

16

10

Reset Input

21

C3    C2

OV

15

6

8

20

To
Pump

19

TO
IGNITION

22

18

5    3

Fig.4

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | GB-A-2 041 599 (FAWCETT et al.) * Figures 2,4,8; page 1, line 130 - page 2, line 64; page 2, lines 72-90; page 3, lines 49-62 * | 1-4,7-10 | B 60 R 25/04 |
| Y | | 5,6 | |
| Y | EP-A-0 232 974 (GOSKER) * Whole document * | 5,6 | |
| X | US-A-4 288 778 (ZUCKER) * Figures 1,2; column 1, lines 43-65; column 2, line 33 - column 3, line 2; column 3, lines 31-47 * | 1-4,9, 10 | |
| X | DE-A-2 708 701 (HEIDER) * Whole document * | 1-4,9 | |
| A | FR-A-2 568 835 (NUMEREX) * Figure 1; page 2, line 27 - page 3, line 6; page 4, lines 27-34 * | 1-10 | |

| | |
|---|---|
| | TECHNICAL FIELDS SEARCHED (Int. Cl.4) |
| | B 60 R |

The present search report has been drawn up for all claims

| Place of search | Date of completion of the search | Examiner |
|---|---|---|
| THE HAGUE | 28-06-1989 | DUBOIS B.F.J. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P0401)